# EUROPEAN PATENT APPLICATION

(11) **EP 2 247 110 A2**
(43) Date of publication of application: **03.11.2010**
(21) Application number: 10161168.9
(22) Date of filing: 27.04.2010
(51) Int. Cl.: H04N 7/26

(54) **Image encoding apparatus, image encoding method and medium on which image enoding program is recorded**

(30) Priority: 28.04.2009 JP 2009110079
(71) Applicant: Fujitsu Limited, Kawasaki-shi, Kanagawa 211-8588 (JP)
(72) Inventor: Hongo, Jumpei, Fukuoka 814-8588 (JP); Yamaguchi, Yousuke, Fukuoka 814-8588 (JP); Tsukuda, Noriaki, Fukuoka 814-8588 (JP); Ishii, Hideaki, Fukuoka 814-8588 (JP); Kimura, Hisanari, Fukuoka 814-8588 (JP); Kobayashi, Shunsuke, Fukuoka 814-8588 (JP); Kazui, Kimihiko, Kanagawa 211-8588 (JP); Ichiki, Atsushi, Kanagawa 211-8588 (JP); Fujita, Shin, Kanagawa 211-8588 (JP)
(74) Representative: HOFFMANN EITLE

(57) **Abstract**

An image encoding apparatus configured to perform sub-band encoding, the apparatus includes: a plurality of encoding units configured to encode an image signal separated into a plurality of sections; a plurality of storage units configured to hold data encoded by the encoding units; and a control unit configured to determine capacities of encoded data of the section of the separated image signal on the basis of statistical information capacities of the section of the separated image signal and data capacities after encoding by the encoding units.

## Description

### CROSS-REFERENCE TO RELATED APPLICATIONS

This application is based upon and claims the benefit of priority of the prior Japanese Patent Application No. 2009-110079, filed on April 28, 2009, the entire contents of which are incorporated herein by reference.

### FIELD

The present invention relates to an image encoding apparatus, an image encoding method, and a medium on which an image encoding program is recorded.

### BACKGROUND

As data encoding methods used for transmitting image data (hereinafter referred to as "data"), such as television broadcast images and moving images, hierarchical encoding and sub-band encoding are known. With such encoding methods, signal separation of data is carried out on the basis of frequency components or regions in the image, and then encoding is carried out to acquire basic data, which can be decoded individually, and additional data, which is used for decoding the basic data at a higher image quality level. Then, the basic data and the additional data are temporarily stored in a buffer and then transmitted at a predetermined transfer rate.

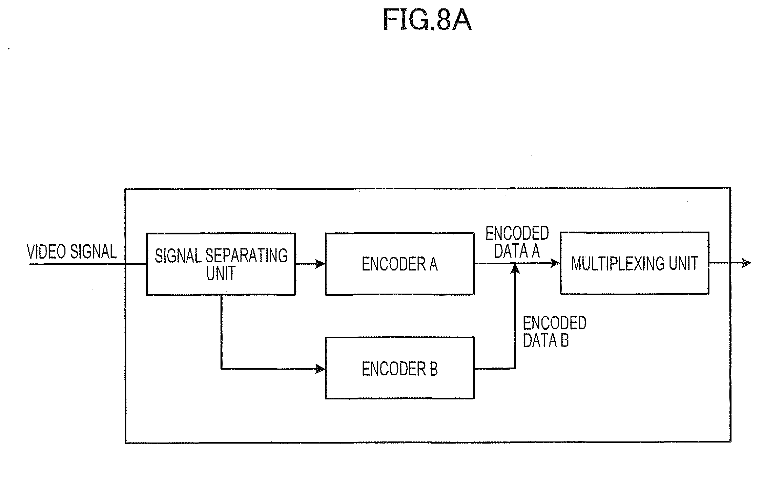

For example, as illustrated in Fig. 8A, with the coding methods described above, a video signal is separated into basic data and additional data. The separated basic data is encoded by an encoder A to acquire encoded data A. The separated additional data is encoded by an encoder B to acquire encoded data B. The encoded data A and the encoded data B are multiplexed at the multiplexing unit and are transmitted to a decoder via a network. Fig. 8A illustrates related art.

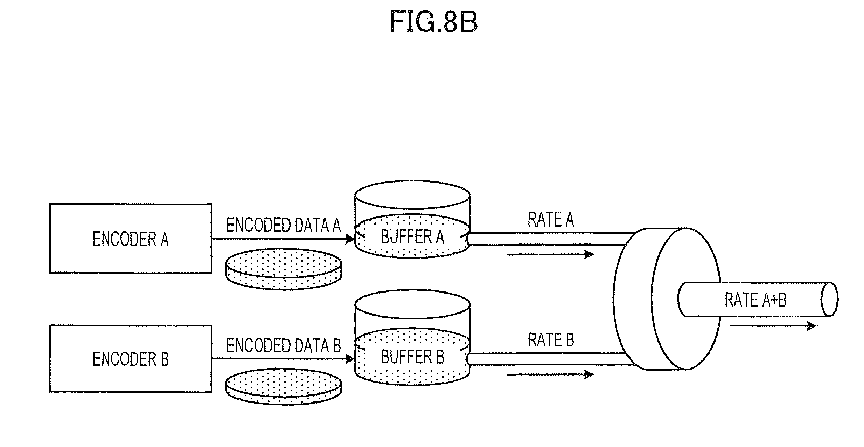

As illustrated in Fig. 8B, the encoded data A encoded at the encoder A is stored in a buffer A and then output to the multiplexing unit at a transfer speed A (rate A). The encoded data B encoded at the encoder B is stored in a buffer B and then output to the multiplexing unit at a transfer speed B (rate B). Then, the encoded data A and the encoded data B are multiplexed at the multiplexing unit and then transmitted to the network at a transfer speed A+B (rate A+B).

As methods of determining the transfer rate for transmitting the encoded basic data and additional data to the network, a constant bit rate (CBR) method and a variable bit rate (VBR) method are known. With the CBR method, the transfer rate of the entire system for transmission to the network is set to a constant rate. With the VBR method, the transfer rate of the entire system to the network is variable, With the VBR method, transmission is possible by varying the transfer rate of each encoder.

Specifically, with the CBR method, the transfer rate of the multiplexed data is fixed at a constant rate A+B by setting the rates A and B, which are illustrated in Fig. 8B, at constant rates.

On the other hand, with the VBR method, the transfer rate is varied depending on the data capacity by setting the rates A and B and the rate A+B as variables.

For example, Japanese Laid-open Patent Publication No. HEI-4-280145 discloses a video transmission apparatus that improves image quality in CBR moving-image encoded communication by monitoring the bandwidth usage condition of the network through which the data is transmitted and by varying the transmission speed of the data through the network.

With the above-described Japanese Laid-open Patent Publication No. HEI-4-280145, there is a problem in that image quality is lowered when there is a buffer shortage. Specifically, with the above-described CBR method, the output transfer rate and the buffer size are set for each encoder so as to control the buffers in such a manner to prevent overflow and underflow. Thus, there is a problem in that image quality is lowered by buffer control performed when there is a buffer shortage.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has (have) been described in detail, it should be understood that the various changes, substitutions, and alterations could be made hereto without departing from the spirit and scope of the invention.

### SUMMARY

An image encoding apparatus configured to perform sub-band encoding, the apparatus includes; a plurality of encoding units configured to encode an image signal separated into a plurality of sections; a plurality of storage units configured to hold data encoded by the encoding units; and a control unit configured to determine capacities of encoded data of the section of the separated image signal on the basis of statistical information capacities of the section of the separated image signal and data capacities after encoding by the encoding units.

### BRIEF DESCRIPTION OF DRAWINGS

Fig. 1 is a block diagram illustrating the configuration of an image encoding apparatus according to an embodiment.

Fig. 2 illustrates an image encoding order.

Fig. 3 illustrates synchronization of the image encoding order.

Fig. 4 illustrates a rate control unit.

Figs. 5A, 5B, and 5C illustrate buffer transition.

Fig. 6 (including Figs. 6A and 6B) is a sequence diagram illustrating the steps in encoding and encoded-data transmission performed by the image encoding apparatus according to an embodiment.

Fig. 7 illustrates a computer that executes an image encoding program according to an embodiment.

Figs. 8A and 8B illustrate the related art.

Figs. 9A and 9B illustrate the problem to be solved by the present invention.

### DETAILED DESCRIPTION OF THE EMBODIMENTS

Embodiments of an image encoding apparatus, an image encoding method, and an image encoding program according to the present invention are described below in detail with reference to the accompanying drawings.

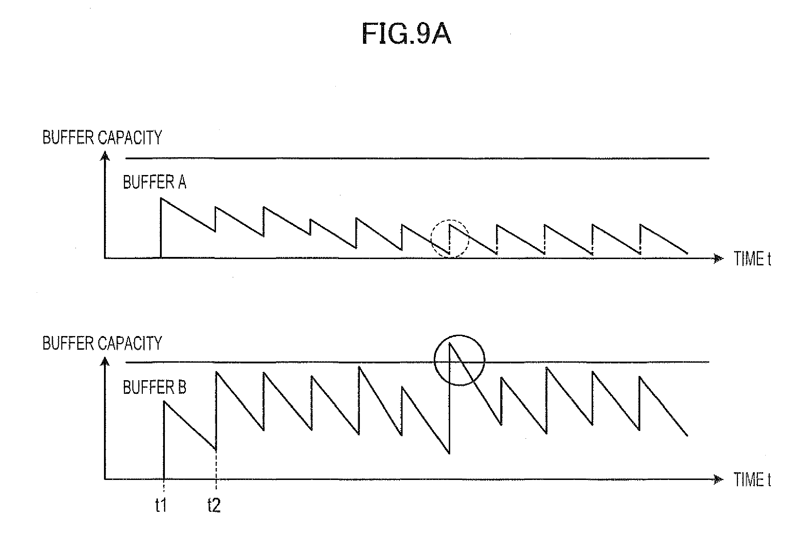

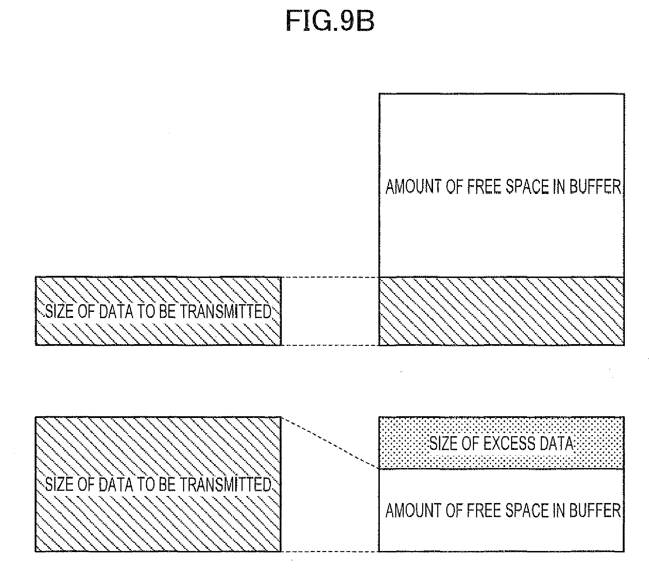

First, a CBR buffer control, which is a problem to be solved by this invention, will be described with reference to Figs. 9A and 9B.

Fig. 9A illustrates the problem to be solved by this invention. In Fig. 9A, the vertical axis represents the buffer content, whereas the horizontal axis represents time. As illustrated in Fig. 9A, upon completion of data encoding, a CBR buffer receives the encoded data and sends out the encoded data to a decoder in sequence at a constant transfer rate. For example, a buffer A and a buffer B receive encoded data at timing t1 illustrated in Fig. 9A and send out the received encoded data to the decoder in sequence at a constant transfer rate until timing t2.

The processing carried out depending on the amount of encoding data generated by an encoder with respect to the transfer rate will be described below. When the amount of encoding data generated by the encoder is small with respect to the transfer rate, the CBR encoder prevents a buffer underflow by feeding (inserting) invalid data.

(See the dotted circle in Fig. 9A)

On the other hand, when the amount of encoding data generated by the encoder is large with respect to the transfer rate, the CBR encoder reduces the amount of generated information by increasing the quantizing step for generating the encoding data and reducing image quality to prevent a buffer overflow. (See the solid circle in Fig. 9A)

As shown in Fig. 9B, one of the buffers has free space since the data to be transmitted is small. In contrast, with the other buffer, when the size of the data to be transmitted is large and exceeds the size of the free space in the buffer, the data size can be reduced by deleting the excess data. In other words, there is a problem in that image quality is lowered by carrying out buffer control for each encoder on the basis of the amount of generated information.

With a transmission method using VBR, each encoder is regulated to a maximum rate, and, when data exceeds the maximum rate, the data size needs to be reduced by lowering the image quality, in a similar manner as the CBR encoder, and thus there is a problem in that image quality is lowered.

Furthermore, according to the circumstance we use IP Network for variable bit rate,

it may turn up Packet loss by the buffer overflow in the router caused by burst data in this network.

In this case, it comes up a decrease in the image quality after decoding.

An embodiment of an image encoding apparatus according to the present invention will be described below.

First Embodiment

Configuration of Image Encoding Apparatus According to First Embodiment

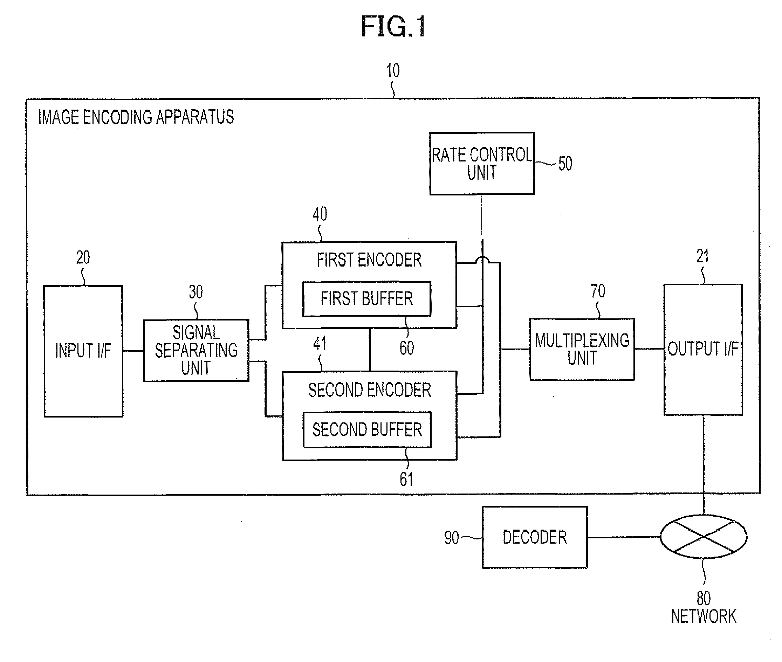

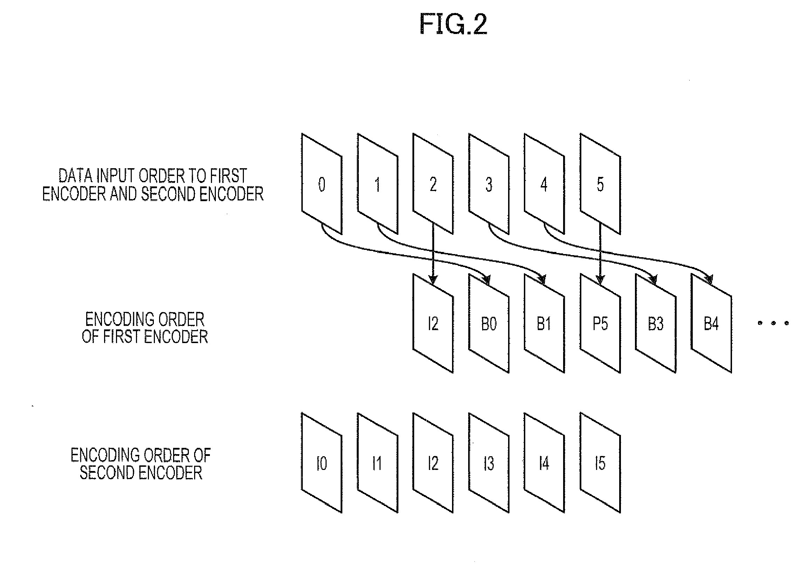

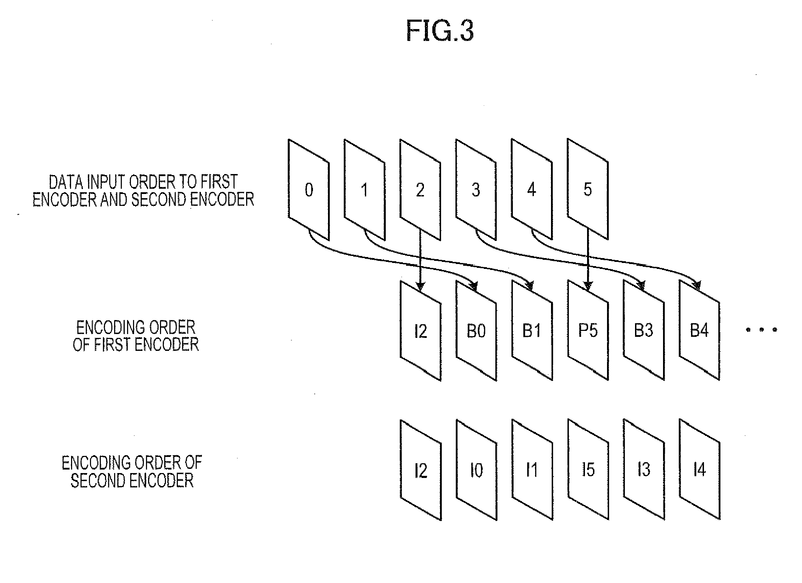

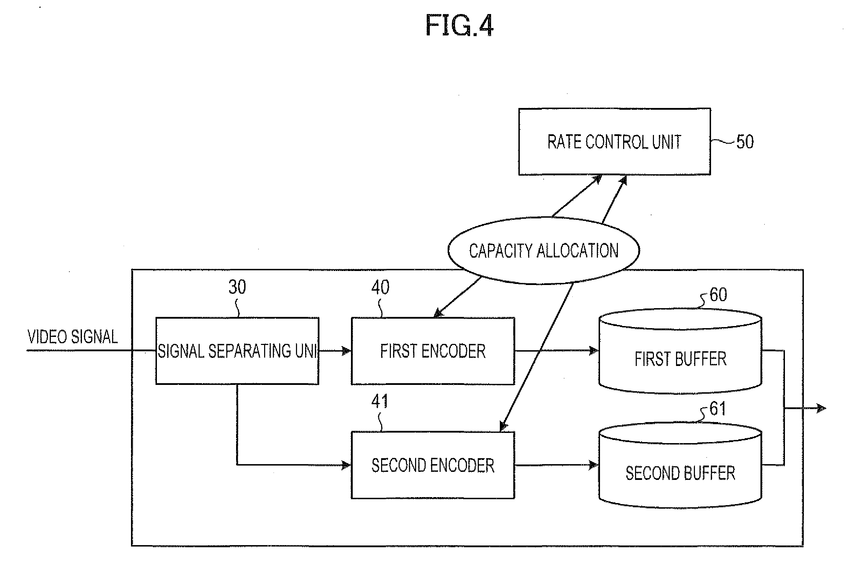

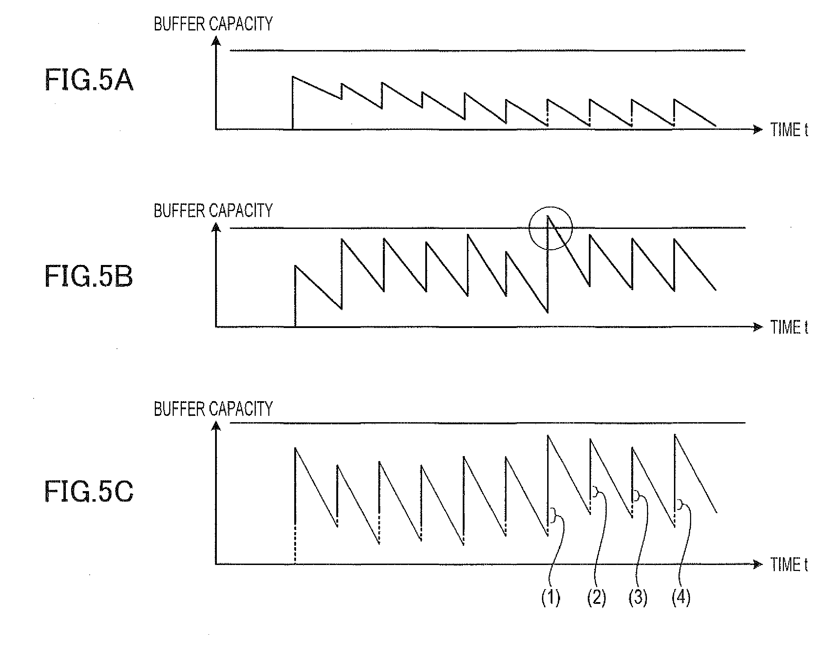

The configuration of an image encoding apparatus according to a first embodiment will be described with reference to Figs. 1 to 5. Fig. 1 is a block diagram illustrating the configuration of the image encoding apparatus according to the first embodiment. Fig. 2 illustrates image encoding orders. Fig. 3 illustrates synchronization of the image encoding orders. Fig. 4 illustrates a rate control unit. Fig. 5 illustrates buffer transition.

As shown in Fig. 1, an image encoding apparatus 10 according to the first embodiment includes an input I/F 20, an output I/F 21, a signal separating unit 30, a first encoder 40, a second encoder 41, a rate control unit 50, a first buffer 60 in the first encoder 40, a second buffer 61 in the second encoder 41, and a multiplexing unit 70. As illustrated in Fig. 1, the image encoding apparatus 10 according to the first embodiment is connected to a decoder 90 via a network 80.

The input I/F 20 is an interface for outputting input video signals to the signal separating unit 30 via a network (not shawn).

The output I/F 21 is an interface for sending out encoded data that is multiplexed and sent out by the multiplexing unit 70 to the decoder 90 via the network 80.

The network 80 is a wired or wireless transmission channel for transmitting encoded data from the image encoding apparatus 10 to the decoder 90.

The decoder 90 decodes the encoded data received from the image encoding apparatus 10 via the network 80. For example, the decoder 90 decodes the encoded data to a video signal. In Fig. 1, only the decoder 90 is illustrated. Actually, however, a plurality of decoders, including the illustrated one, is connected to the network 80.

The signal separating unit 30 separates the video signal input via the input I/F 20 into a plurality of data items on the basis of frequency components and/or regions in the image and time-sequentially transmits the separated data items to the first encoder 40 and the second encoder 41, which are described below. For example, the signal separating unit 30 separates a video signal into separated data items A and separated data items B and time-sequentially transmits the separated data items A to the first encoder 40 described below. Furthermore, the signal separating unit 30 time-sequentially transmits the separated data items B to the second encoder 41 described below. The separated data items A and the separated data items B are, for example, high-frequency data and/or low-frequency data.

The first encoder 40 receives data items separated by the signal separating unit 30 and performs encoding. For example, the first encoder 40 time-sequentially receives the separated data items A separated from a video signal by the signal separating unit 30 and encodes the received separated data items A to obtain basic data that can be decoded to the video signal. Below, the data encoded by the first encoder 40 may be referred to as "first encoded data".

First, the first encoder 40 encodes each of the separated data items A that are received time-sequentially according to I-picture encoding, B-picture encoding, or P-picture encoding in an encoding order corresponding to the type of encoding.

An I picture is also known as "intra-picture" and is data encoded independently from the correlation with other pictures time-sequentially received immediately before and immediately after itself. A B picture is data encoded on the basis of the correlation with pictures time-sequentially received immediately before and immediately after itself. A P picture is data encoded on the basis of the correlation with a picture time-sequentially received immediately before itself. The B picture and P picture may be collectively referred to as "inter-picture". For example, when the first encoder 40 encodes the input separated data items A in the order of IBBP in picture units, the separated data items A need to be rearranged since the B pictures require reference to images immediately before and immediately after themselves.

Specifically, as illustrated in Fig. 2, when the first encoder 40 receives the separated data items A from the signal separating unit 30 in the order of "0, 1, 2, 3, 4, 5" in picture units, the first encoder 40 rearranges these picture units in accordance with the encoding method. For example, when the first encoder 40 encodes the input pictures in the order of IBBP, as illustrated in Fig, 2, the encoding order of the B pictures, which require reference to images immediately before and immediately after themselves, are changed. Specifically, the encoding order is changed to "I2, B0 B1, P5, B3, B4" to generate encoded data. Here, I represents an I picture, B represents a B picture, and P represents a P picture. Since I-picture encoding is performed on the separated data item A "2", and B-picture encoding is performed on the separated data items A "0" and "1", as illustrated in Fig. 2, the first encoder 40 starts the encoding process upon reception of the separated data item A "2".

The first encoder 40 according to this embodiment calculates the encoding difficulty for each data item to be encoded and transmits the calculated encoding difficulty to the rate control unit 50, which is described below. The encoding difficulty is, for example, parameters related to the information amount generated by the encoded data, such as the sum of inter-screen absolute difference or vector information. Specifically, the first encoder 40 calculates the amount of statistical information, such as image complexity or the amount of generated information, as the encoding difficulty and transmits this to the rate control unit 50, which is described below. When image complexity is calculated as the encoding difficulty, the first encoder 40 calculates X (image complexity) = S (generated encoded bit amount) x Q (average quantized scale) and transmits this to the rate control unit 50, which is described below.

For example, the first encoder 40 calculates the encoding difficulties for the pictures "2, 0, 1, 5, 3, 4" in the separated data items A and transmits these to the rate control unit 50, which is described below.

When the pictures of the separated data items A are encoded, the first encoder 40 selects encoding parameters so that the encoded-data capacity equals the data capacity determined by the rate control unit 50, which is described below, and then performs encoding. For example, when the picture "2" in the separated data items A is encoded according to an I-picture data structure, the first encoder 40 generates "12" in accordance with the encoded data capacity determined by the rate control unit 50, which is described below. Determination of data capacity will be described in detail below.

The second encoder 41 receives the separated data items B separated by the signal separating unit 30 and performs encoding. For example, the second encoder 41 time-sequentially receives the separated data items B separated from a video signal by the signal separating unit 30 and encodes the received separated data items B to additional data. The additional data is encoded data used for improving the image quality of the basic data obtained by encoding the separated data items A by the first encoder 40. Hereinafter, data encoded by the second encoder 41 may be referred to as'"second encoded data".

The second encoder 41 performs encoding according to the I-picture data structure on the pictures of the separated data items B in the order received from the signal separating unit 30. For example, as illustrated in Fig. 2, the second encoder 41 receives the pictures of the separated data items B from the signal separating unit 30 in the order of "0, 1, 2, 3, 4, 5". The second encoder 41 performs encoding in the received order and generates "I0, I1, I3, I4, I5". Since the encoding order is set to the order the data is received, as illustrated in Fig. 2, the second encoder 41 starts encoding upon reception of picture "0" in the separated data items B.

When the first encoder 40 encodes the input pictures in the order of IBBP, the pictures of the received data need to be rearranged. On the other hand, since the second encoder 41 performs only I-picture encoding, a reference image is not required, and thus, the encoding order can be synchronized with that for the first encoder 40.

For example, as illustrated in Fig. 3, when the first encoder 40 rearranges the pictures of the separated data items A received in the order of "0, 1, 2, 3, 4, 5" to an encoding order of "2, 0, 1, 3, 4, 5", the second encoder 41 sets its encoding order to "2, 0, 1, 3, 4, 5". Furthermore, the second encoder 41 sets the encoding start time in synchronization with the encoding start time of the first encoder 40. In other words, when the first encoder 40 time-sequentially generates the encoded data "I2, B0, B1, P5, B3, 84" of the separated data items A, as illustrated in Fig. 3, the second encoder 41 time-sequentially generates the encoded data "I2, I0, I1, I5, I3, I4" of the separated data items B in synchronization.

The second encoder 41 according to this embodiment calculates the encoding difficulty of each data item to be encoded, in the same manner as the first encoder 40, and transmits the calculated encoding difficulties to the rate control unit 50, which is described below.

When the pictures of the separated data items B are encoded, the second encoder 41 according to this embodiment selects encoding parameters so that the encoded-data capacity equals the data capacity determined by the rate control unit 50, which is described below, and then performs encoding. For example, when the picture "2" of the separated data items B is encoded according to an I-picture data structure, the second encoder 41 generates an I picture "I2" in accordance with the encoded-data capacity determined by the rate control unit 50, which is described below. Determination of data capacity will be described in detail below.

The data encoded by the first encoder 40 is stored in the first buffer 60.

The data encoded by the second encoder 41 is stored in the second buffer 61.

The rate control unit 50 determines the encoded-data capacity of the encoded data on the basis of the amount of statistical information (for example, image complexity) of the data encoded by the first encoder 40 and the second encoder 41 and the remaining capacities in the first buffer 60 and the second buffer 61.

In other words, as illustrated in Fig. 4, the rate control unit 50 determines and allocates the capacity of the data encoded by each encoder to control the amount of encoded data input from the first buffer 60 and the second buffer 61. In this way, the rate control unit 50 controls the transfer rate of the data output from the multiplexing unit 70, which is described below, to the decoder 90.

Specifically, the rate control unit 50 acquires information about the current remaining capacities in the first buffer 60 and the second buffer 61. A current remaining capacity is determined by subtracting the capacity of a buffer currently in use from the maximum capacity of the system, Then, the rate control unit 50 acquires information about the encoding difficulties calculated by both the first encoder 40 and the second encoder 41. Then, the rate control unit 50 calculates the current total remaining capacity by adding the remaining capacity of the first buffer 60 and the remaining capacity of the second buffer 61, calculates allocated capacities of the encoders using the encoding difficulties, and allocates the calculated allocated capacities to the first encoder 40 and the second encoder 41.

An allocated capacity is calculated as follows, where "Xn" represents the encoding difficulty of the nth encoder, "Target n" represents the allocated capacity of the nth encoder, and "Max Data" represents the maximum allowable capacity.

The rate control unit 50 calculates the allocated capacity for the first encoder 40 by "Target 1 = Max Data * X1/(X1+X2)" and allocates the calculated allocated capacity to the first encoder 40. The rate control unit 50 calculates the allocated capacity for the second encoder 41 by "Target 2 = Max Data * X2/(X1+X2)" and allocates the calculated allocated capacity to the second encoder 41.

As described above, the first encoded data and the second encoded data time-sequentially encoded at the first encoder 40 and the second encoder 41 in accordance with the data capacities determined by the rate control unit 50 are stored in the first buffer 60 and the second buffer 61, respectively. Then, the sum of the first encoded data and the second encoded data that are time-sequentially stored is less than or equal to the current remaining capacity. This will be described below with reference to Figs. 5A-5C. In Figs. 5A-5C, the vertical axes represent the buffer content, and the horizontal axes represent time.

In the past, the rate control unit 50 that allocates buffer capacities to the first encoder 40 and the second encoder 41 was not provided and linked encoding between the first encoder 40 and the second encoder 41 could not be performed. Therefore, when the first encoded data capacity was small in the buffer of the first encoder 40, invalid data was fed to prevent a buffer underflow (see the dotted lines in Fig. 5A).

Furthermore, for example, when the second encoded data capacity exceeded the buffer content in the second encoder 41, part of the second encoded data was discarded to reduce the amount of data (see the circled area in Fig. 5B).

However, with this embodiment, through allocating capacities to the encoders by the rate control unit 50, the invalid data capacity can be used for the exceeded contents of the second encoded data (see (1) to (4) in Fig. 5C), Thus, as illustrated in Fig. 5C, the sum of the first encoded data (see dotted lines) and the second encoded data (see solid lines) is constantly lower than the prescribed maximum buffer capacity. In other words, in this embodiment, discarding of the second encoded data can be prevented.

As described above, the rate control unit 50 calculates the capacities to be allocated to the encoders where the remaining capacities of the buffers are set as parameters. However, as a method of calculating the allocated capacities, it is also possible to set the amount of encoded data generated at the encoders as parameters, instead of the remaining capacities of the buffers.

For example, when there is a bias in the amount of information generated by each encoder for each picture, the amount of generated information can be used for determining the allotted capacities, and, similarly, the variation with respect to the planned amount of allotted information may be used as parameters.

Each of the buffers 60 and 61 in the encoders has a storage capacity (maximum capacity), which is the sum of the encoders. Accordingly, it is possible to allocate the entire data by performing encoding by only one.

The multiplexing unit 70 multiplexes the plurality of encoded data items output from the first buffer 60 and the second buffer 61 and transmits the multiplexed data at a constant transfer rate to the decoder 90 via the network 80.

Processing Steps by Image Encoding Apparatus According to First Embodiment

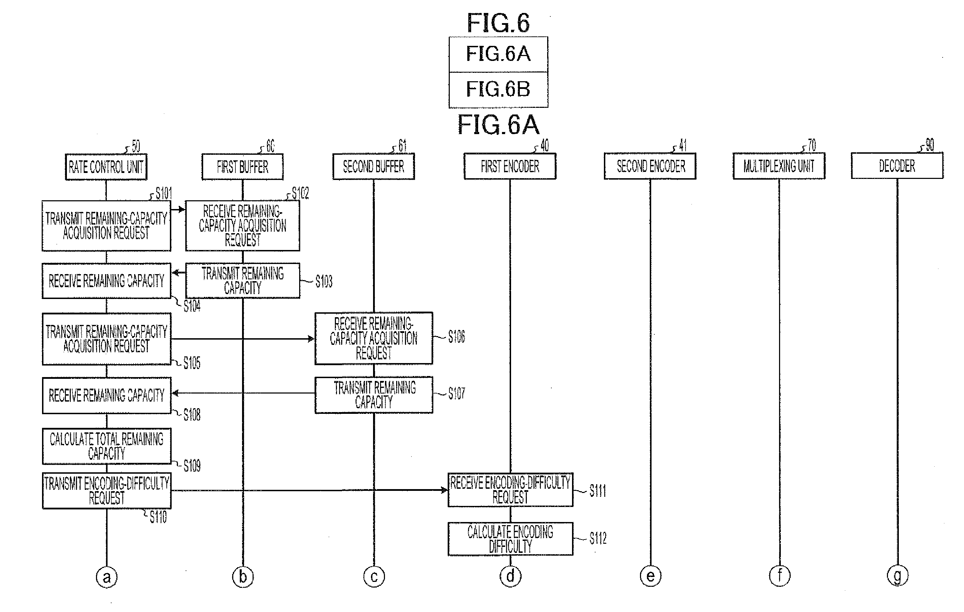

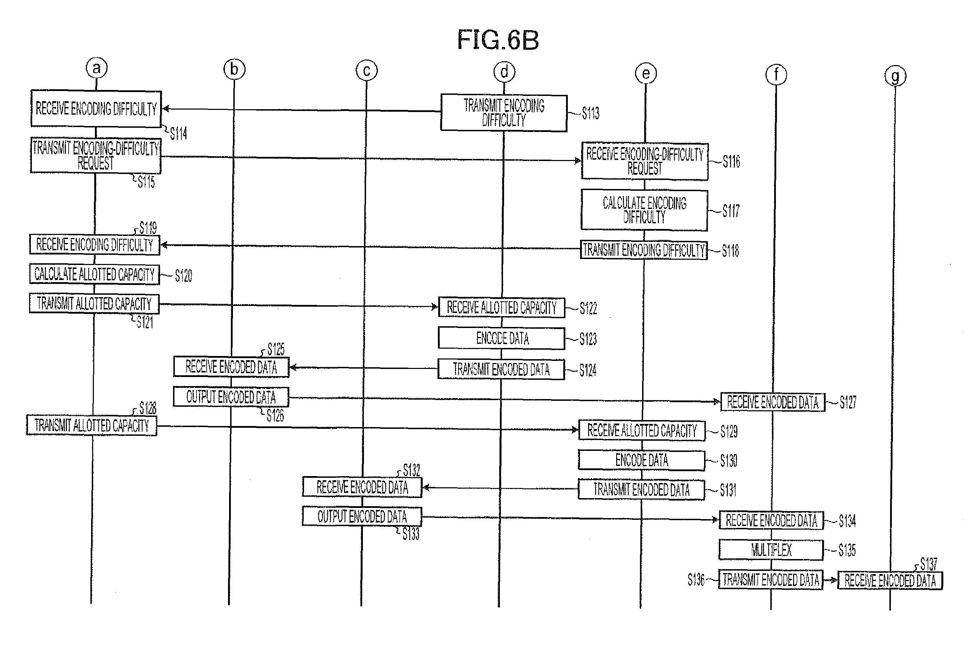

Next, the processing performed by the image encoding apparatus according to the first embodiment will be described with reference to Fig. 6. Fig. 6 is sequence diagram illustrating the steps in encoding and encoded data transmission performed by the image encoding apparatus according to the first embodiment. The image encoding apparatus 10 according to this embodiment starts the processing described below upon reception of the data items separated by the signal separating unit 30 by the first encoder 40 and the second encoder 41.

As illustrated in Fig. 6, the rate control unit 50 of the image encoding apparatus 10 according to this embodiment transmits a current remaining-capacity acquisition request to the first buffer 60 (Step S101). The first buffer 60 receives the remaining-capacity acquisition request (Step S102) and transmits the current remaining capacity (maximum allowable capacity) to the rate control unit 50 (Step S103).

The rate control unit 50 transmits a current remaining-capacity acquisition request to the second buffer 61 (Step S105). The second buffer 61 receives the remaining-capacity acquisition request (Step S106) and transmits the current remaining capacity (maximum allowable capacity) to the rate control unit 50 (Step S107).

The rate control unit 50 performs the above-described Steps S101 to S103 and the Steps S105 to S107 simultaneously.

Then, the rate control unit 50 receives the remaining capacities from the buffers (Steps S104 and S108) and calculates the total remaining capacity from the remaining capacities received from the first buffer 60 and the second buffer 61.

Then, the rate control unit 50 transmits an encoding-difficulty acquisition request to the first encoder 40 (Step S110).

The first encoder 40 receives the encoding-difficulty acquisition request from the rate control unit 50 (Step S111), calculates the current encoding difficulty of the data to be encoded (Step 5112), and transmits the encoding difficulty to the rate control unit 50 (Step 5113). For example, when the first encoder 40 calculates the image complexity as the encoding difficulty, X (image complexity) = S (generated encoded bit amount) x Q (average quantized scale) is calculated.

When the rate control unit 50 calculates the total remaining capacity in Step S109, it also sends an encoding-difficulty acquisition request to the second encoder 41 (Step S115).

Then, the second encoder 41 receives the encoding-difficulty acquisition request from the rate control unit 50 (Step S116), calculates the current encoding difficulty of the data to be encoded (Step S117), and transmits the encoding difficulty to the rate control unit 50 (Step S118). For example, when the second encoder 41 calculates the image complexity as a screen difficulty, X (screen complexity) = S (generated encoded bit amount) x Q (average quantized scale) is calculated.

The rate control unit 50 performs the above-described Steps S110 to S113 and the Steps S115 to S118simultaneously.

Then, the rate control unit 50 receives the encoding difficulties from the encoders (Steps S114 and S119) and calculates the allocated capacities using the total remaining capacity calculated in Step S109, the encoding difficulty received from the first encoder 40, and the encoding difficulty received from the second encoder 41 (Step S120).

Then, the rate control unit 50 transmits the calculated allocated capacity to the first encoder 40 (Step S121). The first encoder 40 receives the allocated capacity from the rate control unit 50 (Step S122), performs data encoding such that the received allocated capacity is not exceeded (Step S123), and transmits the encoded data to the first buffer 60 (Step S124),

Then, the first buffer 60 receives the encoded data from the first encoder 40 (Step S125) and outputs the received encoded data to the multiplexing unit 70 (Step S126).

The rate control unit 50 transmits the calculated allocated capacity to the second encoder 41 (Step S128). The second encoder 41 receives the allocated capacity from the rate control unit 50 (Step S129), performs data encoding such that the received allocated capacity is not exceeded (Step S130), and transmits the encoded data to the second buffer 61 (Step S131).

Then, the second buffer 61 receives the encoded data from the second encoder 41 (Step S132) and outputs the received encoded data to the multiplexing unit 70 (Step S133).

The above-described Steps S121 to S126 and the Steps S128 to S133 are performed simultaneously.

The multiplexing unit 70 receives the encoded data from the first buffer 60 and the second buffer 61 (Steps S127 and S134), multiplexes the received encoded data (Step S135), and sends out the encoded data to the decoder 90 at a constant transfer rate (Step S136).

The decoder 90 receives the encoded data sent out from the multiplexing unit 70 (Step S137). The decoder 90 decodes the received encoded data.

When the image encoding apparatus 10 according to this embodiment rearranges the data separated by the signal separating unit 30, the above-described processing is started after the encoding order of the first encoder 40 and the encoding order of the second encoder 41 are synchronized.

Whether or not the encoding orders are to be synchronized is determined as described below. When the encoding method is the same, rearrangement is not required since the encoding orders are already synchronized. Even when the encoding methods differ, if the encoding method (only I-picture or P-picture encoding) does not require the encoding order to be changed, rearrangement is not needed. When the encoding methods differ and the encoding order needs to be changed and when one of the encoders performs only I-picture encoding, the encoding order may be changed to match the encoding order of the other encoder and synchronize the encoding orders.

Advantages of First Embodiment

As described above, according to the first embodiment, the signal separating unit 30 separates the input video signal on the basis of frequency components or regions in the image; and the first encoder 40 and the second encoder 41 encode the data separated by the signal separating unit 30. Then, the data encoded by the first encoder 40 and the second encoder 41 are stored in the first buffer 60 and the second buffer 61, respectively. Then, the multiplexing unit 70 multiplexes the encoded data stored in the first buffer 60 and the second buffer 61. The rate control unit 50 determines the capacity of the encoded data of each data item separated by the signal separating unit 30 on the basis of the amount of statistical information on each separated data item and the current remaining capacities of the first buffer 60 and the second buffer 61. The rate control unit 50 carries out control such that encoded data of the determined capacity is sent out from the first encoder 40 and the second encoder 41. In other words, the image encoding apparatus 10 according to this embodiment is capable of varying the amount of data generated at the first encoder 40 and the second encoder 41 within the range of the data transfer rate from the multiplexing unit 70 to the decoder 90 by the control of the rate control unit 50. In other words, it is possible to change the ratio of the amounts of information generated at the encoders while keeping a constant transfer rate from the multiplexing unit 70 to the decoder 90. Thus, even when the amount of one group of data acquired by separating the video signal is large than that of the other group, the data can be encoded and transmitted without reducing the amount data and without decreasing image quality due to a buffer underflow.

According to this embodiment, when the encoding order of the data items is required to be changed for the first encoder 40, and the second encoder 41 performs only I-picture encoding, the encoding order of data to be encoded by the second encoder 41 is synchronized with the rearranged encoding order for the first encoder 40. In other words, data capacities are allocated to the data separated from the same input image by the signal separating unit 30. Thus, the total data capacity of the data to be decoded is not reduced, and a decrease in the image quality after decoding can be prevented even more.

Other Embodiments

The first embodiment is described above. In addition to the above-described first embodiment, various modifications may be made. Other embodiments numbered (1) to (4) will be described below.

(1) Allocated Capacity

In the above-described first embodiment, allocated capacities are determined on the basis of the encoding difficulties of the data to be encoded and the remaining capacities of the buffers. Embodiments are not limited thereto. For example, the allocated capacity of the data to be encoded by either one of the encoders may be weighted. An example of a weighted allocated capacity will be described below as a modification.

The allocated capacity is weighted by the rate control unit 50 determining the allocated capacity on the basis of the importance of the data to be encoded. Specifically, the rate control unit 50 multiplies the allocated capacity by a predetermined value, where the allocated capacity is calculated from the encoding difficulty of an encoder n (Xn), the allocated capacity of the encoder n (Target n), and the maximum allowable capacity (Max Data).

For example, when the separated data items A are encoded by the first encoder 40, the rate control unit 50 multiplies "Target 1 = Max Data *X1/(X1+X2)" by 2 and "Target 2 = Max Data *X2/(X1+X2)" by 1/2,

According to the above-described example, the rate control unit 50 also determines the capacity of encoded data on the basis of the importance of the data to be encoded. Therefore, it is possible to determine the compression rate of the encoding.

(2) Encoder

In the above-described example, the image encoding apparatus according to the present invention includes a first encoder and a second encoder, and encoded data is stored in a first buffer and a second buffer. Embodiments, however, are not limited thereto. For example, more than three encoders may be provided, and encoded data may be stored in buffers in these encoders.

(3) System Configuration etc.

The processing steps, specific names, and information including various data and parameters described in the first embodiment can be freely modified when not otherwise specified. For example, for the image encoding order in the first embodiment, the encoding order of the first encoder 40 may be synchronized with the encoding order of the second encoder 41.

The illustrated components of the implements represent the concepts of their functions, and the components do not necessarily have to be physically identical to those illustrated in the drawings. In other words, specific configurations involving separation and integration of the processing units and storage units (for example, the configuration illustrated in Fig. 1) are not limited to those illustrated. For example, the signal separating unit 30 may be embedded in the rate control unit 50. Furthermore, the processing functions of the implements may entirely or partially be realized by a CPU or a program analyzed and executed by the CPU or may be realized as hardware through a wired logic.

(4) Image Encoding Program

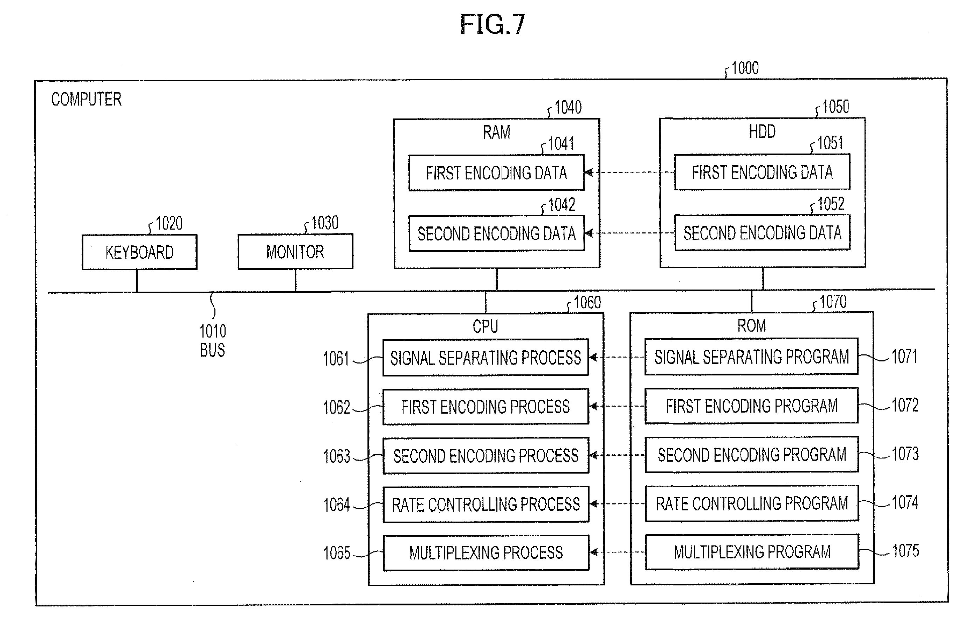

In the above-described first embodiment, various types of processing are realized through a hardware logic. The processing is not limited thereto. Instead, in this embodiment, a program provided in advance may be executed by a computer. An example computer that executes an image encoding program having the same functions as the image encoding apparatus 10 according to the first embodiment will be described below with reference to Fig. 7. Fig. 7 illustrates a computer that executes an image encoding program according to this embodiment.

As illustrated in Fig. 7, a computer 1000, which is an information processing apparatus, includes a keyboard 1020, a monitor 1030, a RAM 1040, a HDD 1050, a CPU 1060, and a ROM 1070. The keyboard 1020, the monitor 1030, the RAM 1040, the HDD 1050, the CPU 1060, and the ROM 1070 are connected via a bus 1010. Although not illustrated, the computer 1000 is connected to a decoder via a network.

An image encoding program that has the same functions as the image encoding apparatus 10 according to the first embodiment is recorded in the ROM 1070 in advance. In other words, as illustrated in Fig. 7, a signal separating program 1071, a first encoder program 1072, a second encoder program 1073, a rate controlling program 1074, and a multiplexing program 1075 are stored in advance. These programs 1071 to 1075 may be suitably integrated or separated in the same manner as the components included in the image encoding apparatus 10 illustrated in Fig. 1.

The CPU 1060 reads out the programs 1071 to 1075 from the ROM 1070 and executes them. In this way, as illustrated in Fig. 7, the programs 1071 to 1075 respectively function as a signal separating process 1061, a first encoding process 1062, a second encoding process 1063, a rate controlling process 1064, and a multiplexing process 1065. The processes 1061 to 1065 respectively correspond to the signal separating unit 30, the first encoder 40, the second encoder 41, the rate control unit 50, and the multiplexing unit 70, which are illustrated in Fig. 1.

As illustrated in Fig. 7, the HDD 1050 is provided with first encoding data 1051 and second encoding data 1052. The first encoding data 1051 and the second encoding data 1052 respectively correspond to the first buffer 60 and the second buffer 61, which are illustrated in Fig. 1. The CPU 1060 registers first encoding data 1041 and second encoding data 1042 to the first encoding data 1051 and the second encoding data 1052, respectively, reads out the first encoding data 1041 and the second encoding data 1042, and stores these in the RAM 1040. The CPU 1060 executes image encoding processing on the basis of the first encoding data 1041 and the second encoding data 1042 stored in the RAM 1040.

The above-described programs 1071 to 1075 do not necessarily have to be stored in the ROM 1070 from the beginning. For example, they may be stored on a portable physical medium to be inserted into the computer 1000, such as a CD-ROM, a MO disk, a DVD disk, a magneto-optical disk, or an IC card, read out, and executed. The programs may also be stored on a secured physical medium, such as a HDD, that is provided inside or outside the computer 1000 or another computer (or server) that is connected to the computer 1000 via a public line, the Internet, a LAN, or a WAN, read out, and executed.

The present invention is capable of suppressing a reduction in image quality even when there is a shortage in one of the buffers in case a signal is separated by hierarchical encoding or sub-band encoding and the separated signals are encoded in a parallel manner and transmitted.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention have been described in detail, it should be understood that the various changes, substitutions, and alterations could be made hereto without departing from the spirit and scope of the invention.

## Claims

1. An image encoding apparatus comprising:
a signal separating unit configured to segment an input image into a plurality of signals;
a plurality of encoding units configured to encode the plurality of signals separated by the signal separating unit;
a plurality of storage units configured to hold data encoded by the encoding units;
a data output unit configured to multiplex and output the encoded data stored in the storage units; and
a control unit configured to determine capacities of the encoded data of the plurality of signals on the basis of statistical information capacities of the plurality of signals and current remaining capacities of the storage units and to carry out control such that the encoded data with the determined capacity is output from each of the encoding units.

2. The image encoding apparatus according to Claim 1, wherein when an encoding order of the signals is changed by a predetermined encoding unit among the plurality of encoding units and the encoding units other than the predetermined encoding unit perform only I-picture encoding, the encoding units other than the predetermined encoding unit change their encoding orders to match the encoding order of the predetermined encoding unit.

3. The image encoding apparatus according to Claim 1, wherein the control unit determines a capacity of the encoded data on the basis of an importance of each of the signals to be encoded.

4. A method of encoding an image comprising:
separating an input image into a plurality of signals;
encoding each of the signals separated in the separating by respective encoding units;
storing data items encoded in the encoding steps in respective storage units;
multiplexing and outputting the encoded data stored in the respective storage units; and
determining capacities of encoded data of the signals on the basis of statistical information capacities of the signals and carrying out control such that the encoded data with the determined capacity is output from each of the encoding units in the encoding.

5. The method of encoding an image according to Claim 4, wherein when an encoding order of the signals is changed by a predetermined encoding unit among the respective encoding units and when the encoding units other than the predetermined encoding unit perform only I-picture encoding, the encoding units other than the predetermined encoding unit change their encoding orders to match the encoding order of the predetermined encoding unit.

6. The method of encoding an image according to Claim 4, wherein the capacity of the encoded data is determined in the determining step on the basis of an importance of the signal to be encoded.

7. A computer-readable storage medium including a program to cause a moving-image encoding method to execute operations, the program comprising:
separating an input image into a plurality of signals;
encoding each of the signals separated in the separating;
storing data items encoded in the encoding steps in respective storage units;
multiplexing and outputting the encoded data stored in the respective storage units; and
determining capacities of encoded data of the signals on the basis of statistical information capacities the signals and carrying out control such that the encoded data with the determined capacity is output from each of the encoding units in the encoding.

8. An image encoding apparatus configured to perform sub-band encoding, the apparatus comprising:
a plurality of encoding units configured to encode an image signal separated into a plurality of sections;
a plurality of storage units configured to hold data encoded by the encoding units; and
a control unit configured to determine capacities of encoded data of the sections of the separated image signal on the basis of statistical information capacities of the sections of the separated image signal and data capacities after encoding by the encoding units.
